(19) Europäisches Patentamt
European Patent Office
Office européen des brevets

(11) **EP 1 517 753 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(21) Anmeldenummer: **03748087.8**

(22) Anmeldetag: **25.09.2003**

(51) Int Cl.:
*B01L 3/00* *(2006.01)*      *B01J 19/00* *(2006.01)*

(86) Internationale Anmeldenummer:
**PCT/EP2003/010667**

(87) Internationale Veröffentlichungsnummer:
**WO 2004/030823 (15.04.2004 Gazette 2004/16)**

(54) **VERFAHREN UND VORRICHTUNG ZUR BESTIMMUNG DER KONZENTRATION VON IN EINER FLüSSIGEN PROBE ENTHALTENEN LIGANDEN**

METHOD AND DEVICE FOR DETERMINING THE CONCENTRATION OF LIGANDS CONTAINED IN A LIQUID SAMPLE

PROCEDE ET DISPOSITIF POUR DETERMINER LA CONCENTRATION DE LIGANDS CONTENUS DANS UN ECHANTILLON LIQUIDE

(84) Benannte Vertragsstaaten:
**CH DE FR GB IT LI NL**

(30) Priorität: **27.09.2002 DE 10245434**

(43) Veröffentlichungstag der Anmeldung:
**30.03.2005 Patentblatt 2005/13**

(73) Patentinhaber:
• **Micronas Holding GmbH**
  **79108 Freiburg i.Br. (DE)**
• **Klapproth, Holger, Dr.**
  **79108 Freiburg (DE)**

(72) Erfinder:
• **KLAPPROTH, Holger, Dr.**
  **79108 Freiburg (DE)**
• **SIEBEN, Ulrich, Dr. rer. nat.**
  **79279 Vörstetten (DE)**

(74) Vertreter: **Huwer, Andreas**
  **Postfach 1305**
  **79013 Freiburg i. Br. (DE)**

(56) Entgegenhaltungen:
**EP-A- 0 482 727      WO-A-00/22434**
**WO-A-00/64487      WO-A-95/11755**
**US-A1- 2002 015 149**

## Beschreibung

Die Erfindung betrifft eine Vorrichtung zur Bestimmung der Konzentration von in einer flüssigen Probe enthaltenen Liganden, mit einem Träger, der mindestens eine Kapillare mit wenigstens einer Öffnung aufweist, wobei in der Kapillaren an der Oberfläche des Trägers Rezeptoren immobilisiert sind, die beim Kontaktieren der Liganden mit diesen eine Bindung eingehen, und mit wenigstens einem Sensor zur Erfassung mindestens eines die Häufigkeit der Liganden-Rezeptor-Bindungen repräsentierenden Messwerts. Des Weiteren betrifft die Erfindung ein Verfahren zur Bestimmung der Konzentration von in einer zu untersuchenden Probe enthaltenen Liganden, wobei an der Oberfläche eines Trägers Rezeptoren immobilisiert werden, die beim Kontaktieren der Liganden mit diesen eine Bindung eingehen, wobei mindestens ein die Häufigkeit der Bindungen zwischen den Liganden und den Rezeptoren repräsentierender Messwert erfasst und anhand dieses Messwertes die Konzentration der Liganden in der Probe bestimmt wird

Aus WO 95 / 11755 A1 kennt man bereits eine Vorrichtung der eingangs genannten Art, die als Träger ein Plättchen aufweist, das von einer Vielzahl von parallel zueinander angeordneten Kapillaren durchsetzt ist, die sich normal zur Ebene des Plättchens erstrecken und einen Durchmesser von 0,1 bis 10 Mikrometer haben. In den Kapillaren sind an der Oberfläche des Trägers Rezeptoren immobilisiert die beim Kontaktieren der Liganden mit diesen eine spezifische Bindung eingehen. Das Plättchen ist derart zwischen einem oberen Reservoir und einer unteren Kammer angeordnet, dass das Reservoir und die Kammer über die Kapillaren miteinander verbunden sind. Zur Bestimmung der Konzentration von in einer flüssigen Probe enthaltenen Liganden wird die Probe zunächst in das obere. Reservoir eingefüllt und dann wird an der unteren Kammer ein Unterdruck angelegt, der die Probe aus dem Reservoir durch die Kapillaren hindurch in die Kammer ansaugt. Dabei geraten die Liganden mit den Rezeptoren in Kontakt und gehen mit diesen eine Bindung ein. Die so gebildeten Bindungskomplexe werden mit Hilfe von fluoreszierenden Markern markiert. Dann werden die Marker durch Bestrahlung mit einer optischen Anregungsstrahlung zur Abgabe von Fluoreszenzlicht angeregt. Das Fluoreszenzlicht wird zur Bestimmung der Häufigkeit der liganden-Rezeptor-Bindungen und somit der Konzentration der Liganden in dem Analyten mit Hilfe eines optischen Sensors detektiert. Durch die Kapillaren weist der Träger eine stark vergrößerte Oberfläche auf, was die Menge an Rezeptoren, die pro Querschnittsfläche an dem Träger gebunden ist, erhöht. Da der Analyt mit Hilfe des Unterdrucks durch die Kapillaren hindurchgezogen wird, gerät eine entsprechend große Anzahl von Liganden mit den Rezeptoren in Berührung. Dadurch ergibt sich zwar eine hohe Nachweisempfindlichkeit. Nachteilig ist dabei jedoch, dass die Messung der Konzentration auf einen relativ engen Konzentrationsbereich begrenzt ist, d.h. die Messwerte weisen nur eine geringe Dynamik auf. Zur Messung der Konzentration eines Liganden, der in Konzentrationsschwankungen vorliegen kann, die größer sind als diese Dynamik, muss die Probe vor der Messung derart verdünnt werden, dass die Konzentration des Liganden nach der Verdünnung innerhalb des mit der Vorrichtung messbaren Konzentrationsbereichs liegt. Da die Konzentration der Uganden vor der Messung nicht bekannt ist, müssen unter Umständen eine Vielzahl von Verdünnungen angefertigt werden, um den gesamten Schwankungsbereich der Konzentration zu erfassen. Durch die Verdünnung der Liganden können jedoch Messungenaulgkeiten auftreten, beispielsweise durch Pipettierfehler.

Es besteht deshalb die Aufgabe, eine Vorrichtung und ein Verfahren der eingangs genannten Art zu schaffen, die über einen breiten Konzentrationsbereich eine Bestimmung der Konzentration mit großer Genauigkeit ermöglichen.

Diese Aufgabe wird bezüglich der Vorrichtung dadurch gelöst, dass die Innenhöhlung der Kapillaren mit einer Flüssigkeit befüllt ist, welche die Liganden nicht oder in geringerer Konzentration enthält als die Probe, dass die Flüssigkeit über die Öffnung mit der Probe in Kontakt bringbar ist, dass die Rezeptoren in der Innenhöhlung der Kapillaren mit Abstand zu der Öffnung angeordnet sind und über eine durch die Flüssigkeit gebildete, sich entlang der Kapillaren erstreckende Diffusionsstrecke mit der Öffnung verbunden sind.

Nach dem Inkontaktibringen der Probe mit der Flüssigkeit diffundieren die Liganden aus der Probe durch die Öffnung der Kapillaren hindurch in die in deren Innenhöhlung befindliche Flüssigkeit. Dabei stellt sich in der Flüssigkeit zunächst ein Konzentrationsgefälle ein, bei dem die Konzentration der Liganden ausgehend von der Konzentration, die sie in Probe aufweisen, mit zunehmendem Abstand von der Öffnung abnimmt. Die Konzentration der Liganden in der Innenhöhlung ist aber auch zeitabhängig und nimmt an einer von der Öffnung der Kapillaren beabstandeten Stelle der Innenhöhlung, ausgehend von einem Konzentrations-Startwert, zu Dabei nähert sich die Konzentration, asymptotisch an einen Konzentrations-Endwert an, der dem Gleichgewichtszustand entspricht. Bei einer Probe, deren Volumen groß gegenüber dem Volumen der in der Innenhöhlung befindlichen Flüssigkeit ist, entspricht der Konzentrations-Endwert etwa der Konzentration, den die Liganden vor dem Inkontaktbringen der Probe mit der Flüssigkeit in Probe aufwiesen. An den Rezeptoren ergibt sich somit eine zeitabhängige Konzentrationsveränderung, bei welcher die Konzentration der Liganden, ausgehend von dem Konzentrations-Startwert, der vorzugsweise etwa null ist, bis zum näherungsweisen Erreichen des Konzentrationsendwerts zunimmt. Durch Wahl eines geeigneten Messzeitpunkts kann also der wenigstens eine mit dem Sensor erfasste Messwert nahezu unabhängig von der Konzentration der Liganden In der Probe jeweils In einen für die Aussteuerung des Sensors günstigen Bereich gelegt werden. Aus dem Zeitpunkt, der Entfernung zwischen der Messstelle und der Öffnung sowie aus dem wenigstens einen Messwert kann dann die Konzentration, den die Liganden vor dem Inkontaktbringen der Probe mit der Flüssigkeit in Probe aufwiesen, in an sich bekannter Weise berechnet werden. Es ist aber auch möglich, die Konzentration mit Hilfe von experimentell ermittelten Referenz-Messwerten zu bestimmen, die zuvor durch Messungen an Proben mit bekannter Liganden-Konzentration mit der Vorrichtung ermittelt wurden. Zum Bestimmen der Konzentration kann der wenigstens eine Sensor mit einer Auswerteeinrichtung verbunden sein. Die Vorrichtung ermöglicht also auf einfache Weise in einem breiten Konzentrationsbereich eine Bestimmung der Konzentration der Liganden In der Probe, ohne dass diese vor dem Inkontaktbringen mit der Flüssigkeit verdünnt werden muss. Die Vorrichtung eignet sich vor allem für die Messung der Konzentration von Hormonen, die In großen Konzentrationsschwankungen vorliegen können. Der Sensor kann beispielsweise ein Sensor zur Messung des elektrischen Widerstands und/oder ein Feldeffektransistor (FET) sein. Die Kapillare kann einen runden oder eckigen, insbesondere rechteckigen oder annähern rechteckigen Querschnitt aufweisen.

Unter einem Rezeptor wird ein Molekül verstanden, das an einer Oberfläche gebunden werden kann und mit einem zweitem Molekül, dem Liganden, eine Bindung eingehen kann. Rezeptoren sind beispielsweise, aber nicht ausschließlich: Nukleinsäuren und deren Derivate (DNA, RNA, PNA, LNA, Oligonukleotide, Plasmide, Chromosomen), Peptide und Proteine (Enzyme, Proteine, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside. Die Rezeptoren können aber auch komplexere Strukturen, wie z.B. Zellen und deren Fragmente, umfassen. Unter einem Liganden werden Moleküle verstanden, die mit einem Rezeptor eine mehr oder weniger spezifische Bindung eingehen können. Liganden sind beispielsweise, aber nicht ausschließlich: Nukleinsäuren und deren Derivate (DNA, RNA, PNA, LNA, Oligonukleotide, Plasmide, Chromosomen), Peptide und Proteine (Enzyme, Proteine, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside, Fette, Fettsäuren und Lipide, Zellen und deren Fragmente, aber auch alle pharmakologisch und toxikologisch wirksamen Substanzen.

Bei einer vorteilhaften Ausführungsform der Erfindung sind an wenigstens zwei in unterschiedlichen Abständen zu der Öffnung angeordneten Stellen der Kapillaren Rezeptoren angeordnet, wobei der wenigstens eine Sensor für diese Stellen jeweils zur Erfassung mindestens eines, die Häufigkeit der Liganden-Rezeptor-Bindungen repräsentierenden Messwerts ausgebildet ist. Die Konzentration der Liganden in der Probe kann dann aus den an diesen Stellen gemessenen Messwerten und dem Abstand der Stellen zu der Kapillaren-Öffnung berechnet werden. Als Sensor kann gegebenenfalls ein Scanner mit einem entlang der Kapillaren bewegbareren Messkopfvorgesehen sein.

Bei einer zweckmäßigen Ausgestaltung der Erfindung ist der wenigstens eine Sensor in der Wandung der Kapillaren angeordnet, wobei die Rezeptoren vorzugsweise an der Oberfläche des Sensors immobilisiert sind. Die Messwerte können dann unmittelbar an den Rezeptoren erfasst werden. Dadurch wird einerseits eine große Messgenauigkeit und andererseits aber auch eine kompakte Bauform der Vorrichtung ermöglicht.

Vorteilhaft ist, wenn dass mehrere der Messanordnungen, bestehend aus dem Sensor und den an dessen Oberfläche immobilisierten Rezeptoren vorzugsweise in konstanten Abständen zueinander in wenigstens einer sich entlang der Diffusionsstrecke erstreckenden Reihe nebeneinander angeordnet sind. Die Konzentration der Liganden in der Probe kann dann mit noch größerer Genauigkeit gemessen werden.

Bei einer zweckmäßigen Ausführungsform der Erfindung sind in der Innenhöhlung der Kapillaren wenigstens zwei Arten von Rezeptoren immobilisiert, wobei diese Arten von Rezeptoren vorzugsweise in wenigstens zwei sich jeweils entlang der Diffusionsstrecke erstreckenden Reihen nebeneinander angeordnet sind. Die einzelnen Rezeptor-Arten können dabei so ausgewählt sein, dass sie mit unterschiedlichen Liganden eine spezifische Bindung eingehen, so dass mit der Vorrichtung die Konzentrationen von mehreren Liganden gleichzeitig gemessen werden können. Gegebenenfalls können die Rezeptoren der unterschiedlichen Rezeptor-Arten auch alternierend neben- bzw. hintereinander angeordnet sein, wobei zwischen zwei Rezeptoren derselben Rezeptor-Art wenigstens ein Rezeptor einer anderen Rezeptorart angeordnet sein kann.

Es ist aber auch denkbar, dass die Rezeptoren von wenigstens zwei Rezeptor-Arten eine unterschiedliche Affinität zu demselben Liganden aufweisen und dass vorzugsweise mindestens drei Rezeptor-Arten vorgesehen sind, die eine abgestufte Affinität zu dem Liganden aufweisen. Die Vorrichtung ermöglicht dann eine Konzentrationsmessung mit noch größerer Dynamik Die Abstufung der Affinität wird vorzugsweise so gewählt, dass sich die Konzentrationsbereiche, die mit den einzelnen Arten von Rezeptoren gemessen werden können, lükkenlos aneinander anschließen oder sich ggf. etwas überdecken. Dabei wird eine Abstufung der Affinität in etwa gleichgroßen Schritten bevorzugt. Es ist aber auch denkbar, die Abstufung der Affinität in unterschiedlich großen Schritten vorzunehmen.

Bei einer vorteilhaften Ausführungsform der Erfindung weist die Kapillare zusätzlich zu der ersten Öffnung eine zweite Öffnung zum Inkontaktbringen der Flüssigkeit mit einem Kompetitoren enthaltenden Fluid auf, wobei die Rezeptoren zwischen den Öffnungen angeordnet und von diesen beabstandet sind. Nach dem Inkontaktbringen mit der Flüssigkeit diffundieren die Kompetitoren in die Innenhöhlung der Kapillaren, wo sie mit Rezeptoren, die nicht an einen Liganden gebunden sind, eine Bindung eingehen. Die Verteilung der Liganden an den Rezeptoren kann dadurch zu einem bestimmten Zeitpunkt fixiert werden. Dabei ist es sogar möglich, dass die zweite Öffnung zum Zuführen des Fluids mit einer Pumpe oder dergleichen Fördereinrichtung verbunden ist, um eine noch schnellere und genauere Fixierung der Ligandenverteilung zu erreichen. Die Pumpe kann beispielsweise eine elektroosmotische Pumpe sein. Durch die Kompetitoren kann außerdem bei kleinen Messsignalen das Verhältnis zwischen Nutzsignal und dem mit zunehmendem Signalpegel ansteigenden Rauschen verbessert werden, wodurch insbesondere bei kleinen Messsignalen eine hohe Messgenauigkeit ermöglicht wird.

Bei einer bevorzugten Ausführungsform der Erfindung sind die Liganden oder die Kompetitoren mit mindestens einem Lumineszenz-Stoff markiert, wobei die Vorrichtung eine Strahlungsquelle zur Aussendung von Strahlung auf den mindestens einen Lumineszenz-Stoff aufweist, die wenigstens eine Anregungswellenlänge hat, bei welcher der Lumineszenz-Stoff zur Abgabe von Lumineszenzstrahlung angeregt wird, wobei der wenigstens eine Sensor als Strahlungsempfänger zum Detektieren der Lumineszenzstrahlung ausgebildet ist, der hinsichtlich seiner spektralen Empfindlichkeit für die von der Strahlungsquelle ausgesandte Strahlung unempfindlich ist. Die an die Rezeptoren gebundenen Liganden oder Kompetitoren können dann auf einfache Weise mit Hilfe des Strahlungsempfänger detektiert werden. Die Liganden und/oder Rezeptoren können direkt mit dem Lumineszenz-Stoff markiert werden oder indirekt über wenigstens ein sekundäres Molekül.

Vorteilhaft ist, wenn die Kapillare für die Lumineszenzstrahlung im Wesentlichen undurchlässig ist und wenigstens einen für die von der Strahlungsquelle ausgesandte Strahlung transparenten Wandungsbereich hat, und wenn die Strahlungsquelle außerhalb der Kapillaren angeordnet ist, derart, dass die von der Strahlungsquelle ausgesandte Strahlung durch den Wandungsbereich hindurch in die Innenhöhlung der Kapillaren eingekoppelt wird. Die Kapillare schirmt dann in dem Wellenlängenbereich der Lumineszenzstrahlung den mindestens einen in der Innenhöhlung der Kapillaren befindlichen Sensor gegen außerhalb der Kapillare auftretende Streu- oder Störstrahlung ab. Dabei wird die Streustrahlung beim Eindringen in die Wandung der Kapillaren entweder vollständig ausgelöscht oder zumindest so stark abgeschwächt, dass sie nach dem Durchdringen der Wandung praktisch nicht mehr von dem Sensor detektiert wird. Somit wird in dem zu detektierenden Wellenlängenbereich eine hohe Störsicherheit der Messung gegenüber Fremd- oder Streustrahlung erreicht.

Bei einer zweckmäßigen Ausgestaltung der Erfindung ist der Lumineszenz-Stoff derart ausgebildet, dass die Wellenlänge der Lumineszenzstrahlung kleiner ist als die Anregungswellenlänge. Derartige aufwärtskonvertierende Lumineszenz-Stoffe sind an sich bekannt, beispielsweise aus EP 0 723 146 A1. Als Beispiele für aufwärtskonvertierende Lumineszenz-Stoffe seinen die Farbstoff BND der Dyomics GmbH, Jena und IR-140 erwähnt Anders als abwärtskonvertierende Lumineszenz-Stoffe beziehen aufwärtskonvertierende Lumineszenz-Stoffe die für die Quantenemission benötigte Energie nicht aus einem einzigen sondern aus mehreren Quanteneffekten. Abwärtskonvertierende Lumineszenz-Stoffe welsen daher im Vergleich zu abwärtskonvertierenden Lumineszenz-Stoffen eine wesentlich größere Stokes-Verschiebung auf, bei welcher die Wellenlänge der Anregungsstrahlung beispielsweise etwa doppelt so groß sein kann wie die Wellenlänge der Lumineszenz-Strahlung. Dadurch ist es möglich, als Strahlungsquelle eine Infrarot-Halbleiterstrahlungsquelle, insbesondere eine Halbleiterlaserdiode vorzusehen, die bei kompakten Abmessungen eine hohe Strahlungsintensität ermöglicht. Das Infrarotlicht derartiger Halbleiterstrahlungsquellen hat außerdem den Vorteil, dass gegenüber kurzwelligerer optischer Strahlung weniger Streueffekte auftreten. Mit Hilfe des aufwärtskonvertierenden Lumineszenz-Stoffs kann die von der Halbleiterstrahlungsquelle abgegebene optische Strahlung in sichtbares Licht oder in nahes Infrarot-Licht konvertiert werden, so dass als Sensor ein kostengünstiger optoelektronischer Halbleitersensor vorgesehen sein kann, der in diesem Wellenlängenbereich eine hohe Detektionsempfindlichkeit aufweist.

Vorteilhaft ist, wenn der für die von der Strahlungsquelle ausgesandte Strahlung transparente Wandungsbereich der Kapillaren durch ein Halbleitersubstrat gebildet ist, und wenn der wenigstens eine Sensor als vorzugsweise auf diesem Halbleitersubstrat angeordnetes Halbleiterbauelement ausgebildet ist. Das Halbleitersubstrat erfüllt dann eine Doppelfunktion und dient außer als Träger für den wenigstens einen Sensor auch als Fenster zum Einkoppeln der Anregungs-Strahlung in die Kapillare. Die Kapillare kann dann mit Methoden der Mikrosystemtechnik besonders kostengünstig hergestellt werden. Dabei kann die Vorrichtung sehr kompakte Abmessungen aufweisen.

Bei einer vorteilhaften Ausführungsform der Erfindung weist die Kapillare zur Bildung einer Diffusionsbarriere an wenigstens einer Stelle der Diffusionsstrecke eine Querschnittsveränderung auf. Dadurch können extrem hohe Ligandenkonzentrationen bis in den Messbereich des wenigstens einen Sensors abgeschwächt werden, was eine noch größere Dynamik der Messung ermöglicht.

Bei einer bevorzugten Ausgestaltung der Erfindung weist die Vorrichtung mehrere der mit der Flüssigkeit befüllten, die Rezeptoren enthaltenden Kapillaren auf, die mit ihren Öffnungen einer gemeinsamen Aufnahmestelle zugewandt sind, wobei die Kapillaren vorzugsweise radial oder stemförmig um die Aufnahmestelle herum angeordnet sind. Dadurch kann die Konzentration der Uganden mit mehreren Kapillaren gleichzeitig bestimmt werden, wodurch eventuelle Streuungen der Messwerte besser kompensiert werden können. In den einzelnen Kapillaren immobilisierten Rezeptoren können eine unterschiedliche Affinität zu derselben Art von Liganden aufweisen und/oder die Kapillaren können in ihrem Querschnittsverlauf unterschiedlich ausgebildet sein. Durch diese Maßnahme(n) kann eine besonders großer Messbereich der Vorrichtung erreicht werden. Es ist aber auch denkbar, dass in den einzelnen Kapillaren unterschiedliche Rezeptoren immobilisiert sind, um die Konzentrationen mehrerer unterschiedlicher Liganden-Arten zu messen.

Bei einer zweckmäßigen Ausführungsform der Erfindung ist die Aufnahmestelle als Verteiler ausgebildet, der zum Zuführen der Probe zu den Öffnungen der Kapillaren mit einer Kanüle verbunden ist. Die Kanüle kann dann zur Durchführung einer Blutuntersuchung auf einfache Weise in die Haut einer zu untersuchenden Person eingestochen werden, beispielsweise in dessen Fingerkuppe. Dabei können gegebenenfalls mehrere Blutwerte gleichzeitig mit der Vorrichtung gemessen werden. Zwischen der Kanüle und wenigstens der Öffnung wenigstens einer Kapillare kann ein Filter angeordnet sein, das derart ausgebildet ist, das nur das in dem Blut enthaltene Serum zu der Öffnung gelangt. Das Filter oder die Filtermatrix bewirkt dann eine Aufreinigung des Bluts.

Vorteilhaft ist, wenn die Kapillaren im wesentlichen in einer Ebene angeordnet sind und wenn die Kanüle mit ihrer Erstreckungsrichtung quer und insbesondere rechtwinklig zu dieser Ebene orientiert ist Die Kapillaren können dann auf einem Trägerplättchen angeordnet oder in dieses integriert sein. Die für das Einstechen der Kanüle In die Haut erforderliche Druckkraft kann durch Druck auf die der Kanüle abgewandte Rückseite des Trägerplättchen auf einfache Welse auf die Kanüle übertragen werden. Die Vorderseite des Plättchens bildet beim Einstechen der Kanüle in die Haut einen Anschlag, der die Einstechtiefe der Kanüle begrenzt.

Bezüglich des Verfahrens wird die vorstehend genannte Aufgabe dadurch gelöst, dass die Rezeptoren in einer Flüssigkeit angeordnet werden, welche die Liganden nicht oder in geringerer Konzentration enthält als die Probe, dass die Probe mit Abstand von den Rezeptoren mit der Flüssigkeit derart in Kontakt gebracht wird, dass die Liganden entlang einer durch die Flüssigkeit verlaufenden Diffusionsstrecke zu den Rezeptoren diffundieren, und dass die Konzentration der Liganden in der Probe aus

- dem mindestens einen Messwert, der Länge der Diffusionsstrecke sowie der Zeitdauer zwischen dem Inkontaktbringen der Probe mit der Flüssigkeit und der Erfassung des mindestens einen Messwerts und/oder

- dem mindestens einen Messwert, der Länge der Diffusionsstrecke sowie einer Diffusionskonstanten und/oder

- mindestens zwei in unterschiedlichen Entfernungen von der Öffnung zeitgleich erfassten Messwerten, sowie der Diffusionskonstanten und/oder

- mindestens zwei in unterschiedlichen Entfernungen von der Öffnung zeitgleich erfassten Messwerte sowie mindestens einen Referenzwert für einen mit der Probe vergleichbaren Analyt bekannter Konzentration

bestimmt wird.

Wie bei der Vorrichtung bereits erläutert wurde, ergibt sich dadurch eine zeit- und ortsabhängige Konzentrationsverteilung in der Flüssigkeit, bei welcher die Konzentration der Liganden gegenüber ihrer ursprünglichen Konzentration In der Probe reduziert ist. Das Verfahren ermöglicht dadurch in einem breiten Konzentrationsbereich eine Konzentrationsmessung, ohne dass ein zur Messwerterfassung verwendeter Sensor in die Sättigung gerät. Die Konzentration der Liganden in der Probe kann aus dem mindestens einen Messwert, der Länge der Diffusionsstrecke sowie der Zeitdauer zwischen dem Inkontaktbringen der Probe mit der Flüssigkeit und der Erfassung des mindestens einen Messwerts ermittelt werden. Wenn die Diffusionskonstante bekannt ist, kann die Konzentration auch aus dem mindestens einen Messwert, der Diffusionskonstanten sowie der Länge der von den Liganden durchlaufenen Diffusionsstrecke bestimmt werden. Ferner besteht die Möglichkeit an wenigstens zwei voneinander beabstandeten Untersuchungsstellen Rezeptoren In der Flüssigkeit anzuordnen, wobei die Probe an einer Kontaktierungsstelle mit der Flüssigkeit in Kontakt gebracht wird, die in unterschiedlichen Entfernungen zu den einzelnen Untersuchungsstellen angeordnet ist, wobei für die einzelnen Untersuchungsstellen zeitgleich jeweils wenigstens ein Messwert für die Häufigkeit der Bindungen zwischen den Liganden und den an den Untersuchungsstellen befindlichen Rezeptoren ermittelt wird und wobei anhand dieser Messwerte, der Diffusionskonstanten und gegebenenfalls der Entfernungen zwischen der Kontaktierungsstelle und den Untersuchungsstellen die Konzentration der Liganden in der Probe bestimmt wird. Schließlich kann die Konzentration der Liganden in der Probe auch aus mindestens zwei in unterschiedlichen Entfernungen von der Öffnung zeitgleich erfassten Messwerten sowie mindestens einem Referenzwert für einen mit der Probe vergleichbaren Analyt mit bekannter Konzentration bestimmt werden. Die Konzentration der Liganden in der Probe kann also auch durch Auswertung des zeitlichen Verlaufs der Anzahl der Liganden-Rezeptoren-Bindungen an einer oder mehreren Untersuchungsstellen bestimmt werden.

Nachfolgend sind Ausführungsbeispiele der Erfindung anhand der Zeichnung näher erläutert. Es zeigen zum Teil stärker schematisiert.

Fig. 1 einen Längsschnitt durch eine Vorrichtung zur Bestimmung der Konzentration von in einer flüssigen Probe enthaltenen Liganden,

Fig. 2 ein Aufsicht auf die Innenwand einer Kapillaren, die ein Sensor-Array mit einer Vielzahl von Photozellen als Sensoren aufweist, die mit Rezeptoren beschichtet sind,

Fig. 3 ein Aufsicht auf eine mehrere nebeneinander angeordnete Kapillaren aufweisende Vorrichtung zur Bestimmung der Konzentration von in einer flüssigen Probe enthaltenen Liganden,

Fig. 4 eine Aufsicht auf eine Vorrichtung zur Bestimmung der Konzentration von in einer flüssigen Probe enthaltenen Liganden, wobei die Vorrichtung mehrere sternförmig um eine Aufnahmestelle herum angeordnete Kapillaren aufweist,

Fig. 5 einen Querschnitt durch die Vorrichtung entlang der in Fig. 4 mit V bezeichneten Ebene,

Fig. 6 einen Querschnitt durch einen Sensor, auf dem ein Rezeptor immobilisiert ist, der einen durch einen Lumineszenz-Stoff markierten Kompetitor bindet, wobei der Lumineszenz-Stoff mit Hilfe von Anregungs-Strahlung zur Abgabe von Lumineszenz-Strahlung angeregt wird,

Fig. 7 einen Querschnitt durch einen Sensor, der in einer geringen Entfernung von einer Öffnung der Kapillaren angeordnet ist

Fig. 8 einen Querschnitt durch einen Sensor, der in einer größeren Entfernung von der Öffnung der Kapillaren angeordnet ist, als der in Fig. 7 gezeigte Sensor, und

Fig. 9 eine graphische Darstellung der spektralen Empfindlichkeit eines als Photodiode ausgebildeten Sensors, wobei auf der Abszisse die Wellenlänge in Nanometern und auf der Ordinate die Quanteneffizienz in Prozent aufgetragen ist

Eine im Ganzen mit 1 bezeichnete Vorrichtung zur Bestimmung der Konzentration von in einer flüssigen Probe enthaltenen Liganden 2 weist eine Kapillare 3 mit einer Innenhöhlung 4 auf, die mit einer Flüssigkeit befüllt ist. Die Flüssigkeit enthält die Liganden nicht oder in geringerer Konzentration als die Probe.

An der die Innenhöhlung 4 seitlich begrenzenden Innenwand der Kapillaren 3 ist eine Rezeptorschicht angeordnet, die ein Vielzahl von Rezeptoren 5 aufweist, die an der Innenwand immobilisiert sind. Die Immobilisierung der Rezeptoren 5 kann beispielsweise durch eine Silanisierung oder eine an der Innenwand angeordnete Polyimidschicht erreicht werden, an welcher die Rezeptoren 5 anhaften. Die Rezeptoren 5 können auf die Innenwand bzw. die darauf befindliche Polyimidschicht aufgedruckt sein.

Die Liganden 2 haben jeweils mindestens ein Eptiop, das beim Kontaktieren eines der Rezeptoren 5 mit diesem eine spezifische Bindung eingeht. Durch die Bindung wird der Ligand 2 über den Rezeptor 5 an der Innenwand der Kapillaren 3 immobilisiert.

Die Kapillare 2 hat an einer ersten Stirnseite eine erste Öffnung 6, an welcher die in der Innenhöhlung 4 befindliche Flüssigkeit mit der Probe in Kontakt bringbar ist. Die Rezeptoren 5 sind mit Abstand zu der Öffnung 6 angeordnet und über eine durch die Flüssigkeit gebildete Diffusionsstrecke mit der Öffnung 6 verbunden.

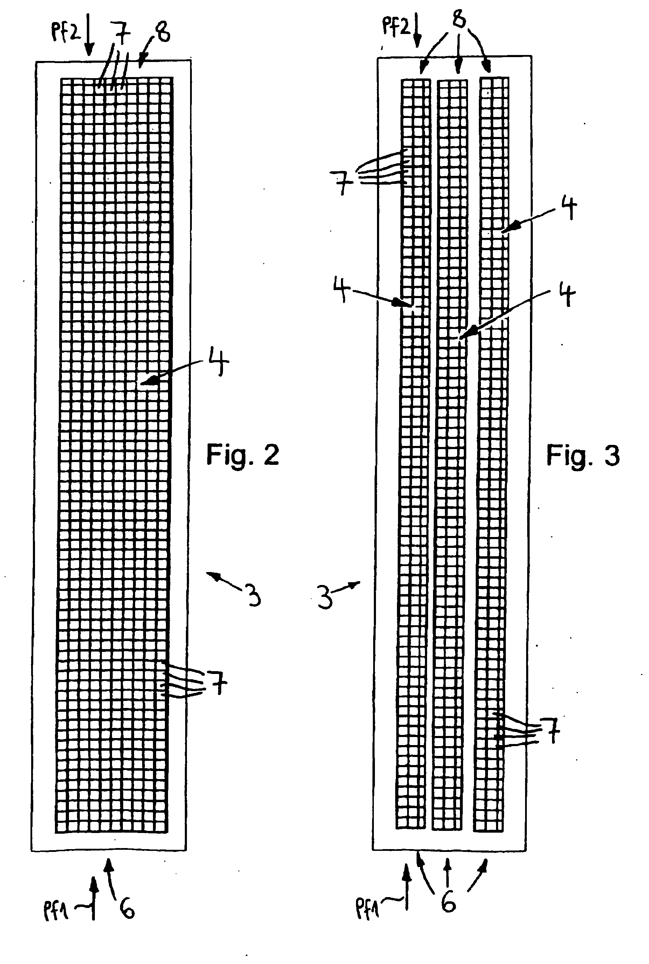

Wie in Fig. 2 und 3 besonders gut erkennbar ist, weist die Kapillare 2 eine Vielzahl von matrixförmig angeordneten Sensoren 7 zur Erfassung von Messwerten auf, die ein Maß für die Häufigkeit der Liganden-Rezeptor-Bindungen darstellen. Die Sensoren 7 sind in mehreren, in Längserstreckungsrichtung der Kapillaren 3 verlaufenden Reihen nebeneinander angeordnet. Die einzelnen Sensoren 7 einer Reihe sind also jeweils unterschiedlich weit von der ersten Öffnung 6 der Innenhöhlung 4 entfernt.

Die Rezeptoren 5 sind an der Oberfläche der Sensoren 7 immobilisiert. Die Messwerte können somit direkt an den Rezeptoren 5 erfasst werden. Es sind aber auch andere Ausführungsformen denkbar, bei denen die Rezeptoren 5 und die ihnen jeweils zugeordneten Sensoren 7 an einander gegenüberliegenden Wandungen der Kapillaren 2 angeordnet sein können.

An Ihrem von der ersten Öffnung 6 entfernten Ende weist die Kapillare 2 eine zweite Öffnung 8 auf, an der die in der Innenhöhlung 4 befindliche Flüssigkeit mit einem Kompetitoren 9 enthaltenden Fluid in Kontakt gebracht werden kann. Zum Zuführen des Fluids ist die Öffnung 8 mit dem Auslass einer in der Zeichnung nicht dargestellten Mikropumpe verbunden.

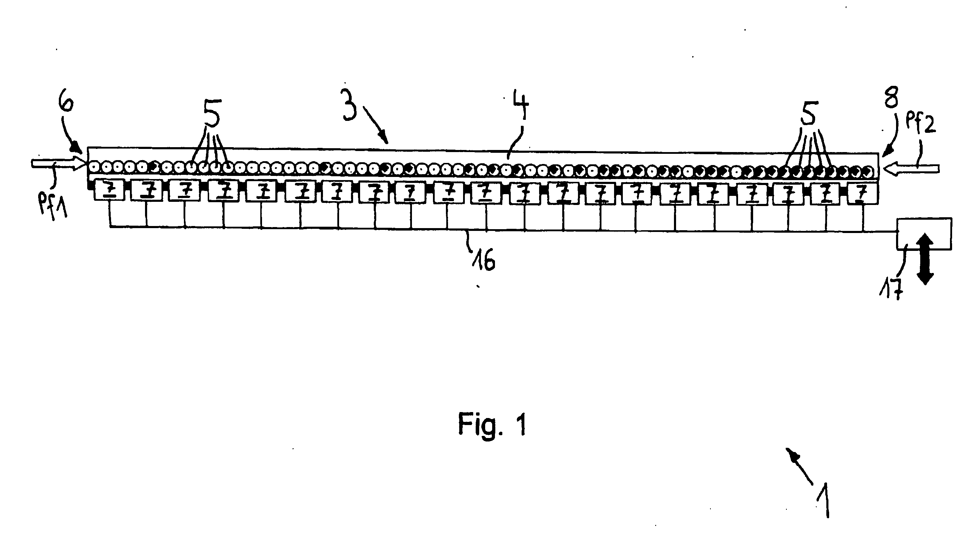

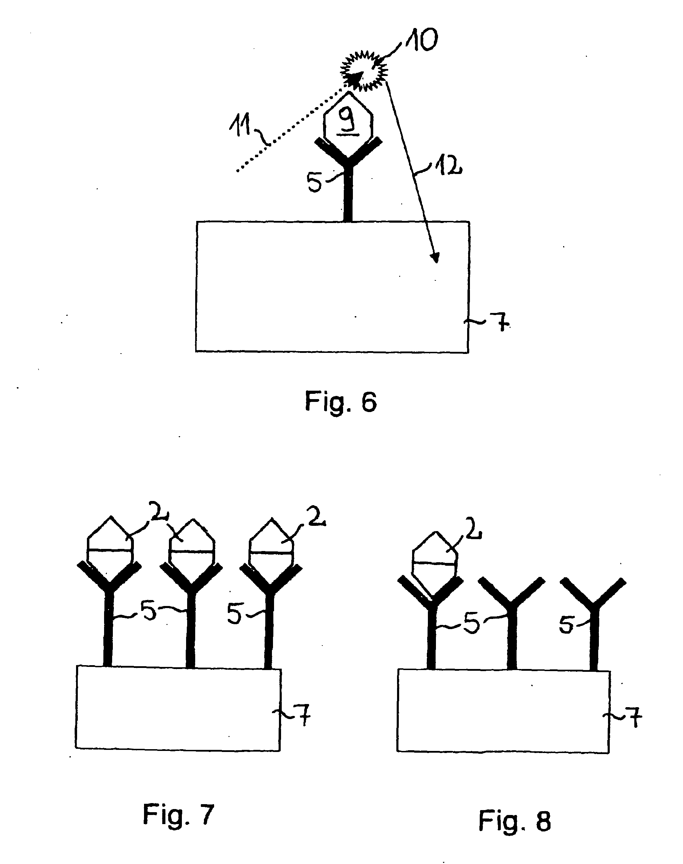

Die Kompetitoren 9 sind mit einem Lumineszenz-Stoff 10 markiert, der bei Bestrahlung mit einer eine Anregungswellenlänge aufweisenden Strahlung 11 zur Abgabe von Lumineszenzstrahlung 12 angeregt wird (Fig. 6). Beim Kontaktieren von freien, nicht an einen Liganden 2 gebunden Rezeptoren 5, binden die Kompetitoren 9 an die Rezeptoren 5 und markieren diese dadurch indirekt mit dem Lumineszenz-Stoff 10. In Fig. 1 ist erkennbar, dass die Sensoren 7 in der Innenhöhlung 4 zwischen der ersten Öffnung 6 und der zweiten Öffnung 8 angeordnet sind.

Zur Bestimmung der Konzentration der in der Probe enthaltenen Liganden wird die Probe an der ersten Öffnung 6 der Kapillaren 3 mit der in der Inenhöhlung 4 enthaltenen Flüssigkeit derart in Kontakt gebracht, dass die Liganden durch die Flüssigkeit hindurch von der Probe zu den in der Kapillaren 3 immobilisierten Rezeptoren 5 diffundieren und dort an diese binden. In Fig. 1 ist die Diffusionsrichtung der Liganden durch einen Pfeil Pfl markiert. Während der Diffusion stellt sich in der Flüssigkeit ein Konzentrationsgefälle ein, bei dem die Konzentration der Liganden, ausgehend von der ersten Öffnung 6 zu der zweiten Öffnung 8, mit zunehmendem Abstand von der ersten Öffnung 6 abnimmt. Die Konzentration in der Kapillaren 4 kann mit Hilfe des 2. Fickschen Gesetzes berechnet werden:

$$\frac{\partial c}{\partial t} = D\left[\left(\frac{\partial^2 c}{\partial x^2}\right) + \left(\frac{\partial^2 c}{\partial y^2}\right) + \left(\frac{\partial^2 c}{\partial z^2}\right)\right]$$

Dabei bedeuten x,y,z die Koordinaten eines kartesischen Koordinatensystems, D die Diffusionskonstante der Liganden 2 und c die Konzentration der Liganden 2. In Fig. 7 ist erkennbar, dass die Konzentration an einem dicht benachbart zu der Öffnung 6 angeordneten Sensor 7 so groß ist, dass im Bereich dieses Sensors 7 praktisch alle Rezeptoren 5 mit Liganden 2 gebunden sind. Bei dem in Fig. 8 gezeigten Sensor, der weiter von der Öffnung 6 entfernt ist als der Sensor 7 in Fig. 7, ergibt sich dagegen eine geringere Liganden-Konzentration, weshalb im Bereich des in Fig. 8 gezeigten Sensors nur ein Teil der dort befindlichen Rezeptoren 5 mit einem Liganden 2 gebunden sind.

Nachdem die Probe für eine definierte Zeitdauer mit der Flüssigkeit in Kontakt gebracht wurde, wird mit Hilfe der Mikropumpe durch die zweite Öffnung 8 hindurch das die Kompetitoren 9 enthaltenden Fluid in Richtung des Pfeils Pf2 in die Innenhöhlung 4 der Kapillaren 3 eingeströmt. Dabei geraten die Kompetitoren 9 mit den noch freien, nicht an einen Liganden 2 gebundenen, in der Innenhöhlung 4 Immobilisierten Rezeptoren 5 in Kontakt und binden an diese. Die Rezeptoren 5 werden dadurch indirekt mit dem Lumineszenz-Stoff 10 markiert. In Fig. 1 sind die mit dem Lumineszenz-Stoff 10 markierten Rezeptoren 5 jeweils durch eine Raute gekennzeichnet Deutlich ist erkennbar, dass die Dichte der mit dem Lumineszenz-Stoff 10 markierten Rezeptoren 5 entlang der Diffusionsstrecke entgegen der Diffusionsrichtung Pfl der Liganden 2 abnimmt Nach dem Markieren der freien Rezeptoren 5 werden die Probe und das Fluid aus der Innenhöhlung 4 entfernt, indem mittels der Mikropumpe eine Spülflüssigkeit welche den Lumineszenz-Stoff nicht enthält, in die Innenhöhlung 4 eingebracht wird:

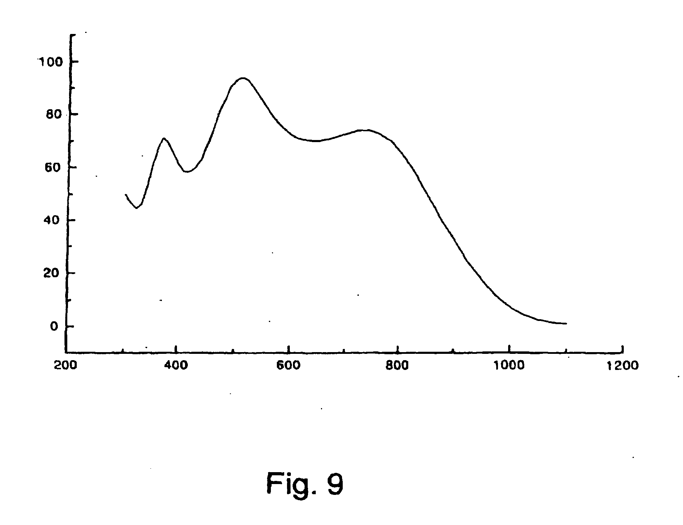

In einem weiteren Schritt wird der Lumineszenz-Stoff 10 mittels einer in der Zeichnung nicht näher dargestellten Strahlungsquelle mit der die Anregungswellenlänge aufweisenden Strahlung 11 bestrahlt. Der Lumineszenz-Stoff 10 wird dadurch zur Abgabe von Lumineszenzstrahlung 12 angeregt. Das Spektrum der Anregungs-Strahlung 11 liegt in einem Wellenlängenbereich oberhalb von etwa 1080 nm und das Spektrum der Lumineszenz-Strahlung 12 in einem Wellenlängenbereich unterhalb von etwa 1080 nm. Die Lumineszenzstrahlung 12 wird mit den Sensoren 7 gemessen. Die Sensoren 7 sind als Strahlungsempfänger ausgebildet, die hinsichtlich ihrer spektralen Empfindlichkeit für die Lumineszenzstrahlung 12 empfindlich und für die von der Strahlungsquelle ausgesandte Strahlung 11 unempfindlich sind (Fig. 9). Die Messsignale der einzelnen Sensoren 7 stellen jeweils ein Maß für die Häufigkeit der Liganden-Rezeptor-Bindungen der an der Oberfläche des Sensors immobilisierten Rezeptoren dar. Da nicht die Liganden, sondern die Kompetitoren mit dem Lumineszenz-Stoff markiert sind, entspricht ein großes Sensor-Messsignal einer geringen und ein kleines Messsignal einer großen Anzahl von Liganden-Rezeptor-Bindungen. Anhand der Messwerte wird die Konzentration der Liganden in der Probe errechnet.

Da sich aufgrund der unterschiedlichen Abstände, welche die einzelnen Sensoren 7 zu der ersten Öffnung 6 aufweisen, jeweils eine unterschiedliche Dichte oder Verdünnung der Liganden 2 an den einzelnen Sensoren 7 ergibt, ermöglicht die Vorrichtung 1 über einen breiten Konzentrationsbereich ein genaue Konzentrationsmessung. Dabei befinden sich über den gesamten Konzentrationsbereich die Arbeitspunkte jeweils mehrere Sensoren in einem für die Messsignal-Gewinnung günstigen Aussteuerungsbereich.

In Fig. 1 ist erkennbar, dass die Sensoren 7 in der Wandung der Kapillaren 3 angeordnet und mit ihrer Detektionsseite der Innenhöhlung 4 zugewandt sind. Der die Sensoren 7 aufweisende Wandungsbereich der Kapillaren ist als Halbleitersubstrat ausgebildet, in das die Sensoren 7 als Halbleiterbauelemente integriert sind. Das Halbleitersubstrat ist für die von der Strahlungsquelle ausgesandte Anregungs-Strahlung 11 transparent. Dadurch ist es möglich, die Strahlungsquelle außerhalb der Kapillaren 3 anzuordnen und die Anregungs-Strahlung 11 durch das Halbleitersubstrat hindurch in die Innenhöhlung 4 der Kapillaren 3 einzukoppeln. Für die Lumineszenzstrahlung ist die Kapillare für im Wesentlichen undurchlässig. Die Kapillare 3 schirmt dadurch die in das Halbleitersubstrat integrierten Sensoren 7 in dem Wellenlängenbereich der Lumineszenzstrahlung gegen außerhalb der Kapillaren 3 auftretende Streu- oder Störstrahlung ab. Beim Eindringen in die Wandung der Kapillaren 3 wird die Streustrahlung entweder vollständig ausgelöscht oder zumindest so stark abgeschwächt, dass sie nach dem Durchdringen der Wandung praktisch nicht mehr von den Strahlungsempfängern 7 detektiert wird. Somit wird in dem zu detektierenden Wellenlängenbereich eine hohe Störsicherheit der Messung gegenüber Fremd- oder Streustrahlung erreicht.

In Fig. 1 bis 3 ist noch erkennbar, dass zueinander benachbart nebeneinander angeordnete Sensoren 7 in Längserstreckungsrichtung der Kapillaren 3 jeweils einen konstanten Abstand zueinander aufweisen.

Bei den Ausführungsbeispielen nach Fig. 3 bis 9 weist die Vorrichtung 1 mehrere der mit der Flüssigkeit befüllten, die Rezeptoren 5 enthaltenden Kapillaren 3 auf Bei dem Ausführungsbeispiel nach Fig. 3 verlaufen die Kapillaren 3 etwa parallel zueinander. Die vorzugsweise in einer gemeinsamen Ebene angeordneten Kapillaren 3 können einstückig miteinander verbunden sein.

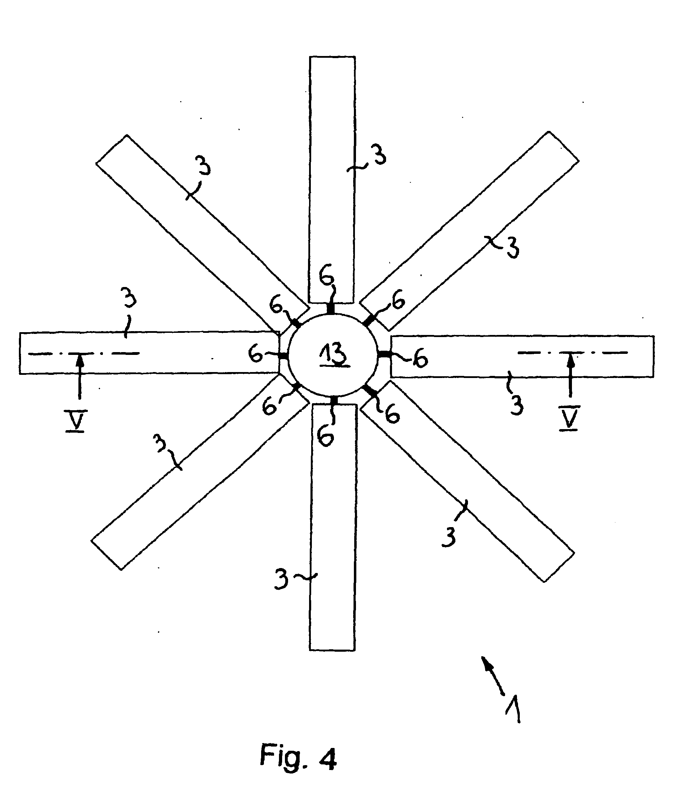

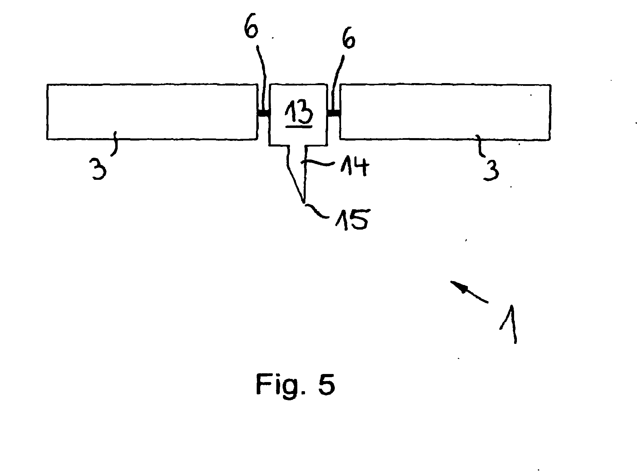

Bei den Ausführungsbeispielen nach Fig. 4 und 5 verlaufen die Kapillaren radial von einer zentralen Aufnahmestelle 13 weg. Die Öffnungen 6 der Kapillaren sind jeweils der Aufnahmestelle 13 zugewandt. Wie in Fig. 4 erkennbar ist, sind die Kapillaren am Umfang der Aufnahmestelle 13 in gleichmäßigen Winkelabständen zueinander angeordnet. Jeweils zwei Kapillaren 3 liegen sich diametral einander gegenüber. Die Kapillaren 3 sind auf einem in der Zeichnung nicht näher dargestellten scheibenförmigen Trägerteil angeordnet, welches die Kapillaren 3 miteinander verbindet.

In Fig. 5 ist erkennbar, dass die Aufnahmestelle 13 als ein die Öffnungen 6 miteinander verbindender Proben-Verteller ausgebildet ist, der zum Zuführen der Probe zu den Öffnungen 6 mit einer Auslassöffnung einer Kanüle 14 oder Hohlnadel verbunden ist. Die Kanüle 14 ist mit ihrer Erstreckungsrichtung etwa rechtwinklig zu einer von den Kapillaren 3 aufgespannten Ebene angeordnet. An ihrem der Auslassöffnung gegenüberliegenden, von den Kapillaren 3 entfernten Ende weist die Kanüle 14 eine Nadelspitze 15 auf, die zur Blutentnahme In die Haut eines Probanden einstechbar ist. Die Nadelspitze 15 kann hinter einer durchstechbaren Abdeckung angeordnet sein, die als Originalitätsverschluss ausgebildet sein kann. In wenigstens zwei Kanülen 4 sind zum Messen der Konzentration von unterschiedlichen, im Blut des Probanden enthaltenen Biomolekülen, unterschledliche Arten von Rezeptoren 5 immobilisiert. Die Vorrichtung 1 weist für jede Rezeptor-Art jeweils mehrere Kapillaren 3 auf Dadurch ist es möglich, für die einzelnen Biomoleküle mehrere Messwerte zu erfassen und aus diesen einen Mittelwert zu bilden.

In Fig. 1 ist noch erkennbar, dass die Sensoren 7 über Signalleitungen 16 mit einer Auswerteeinrichtung 17 verbunden ist, welche aus den Messwerten der einzelnen Sensoren 7 die Konzentration der Liganden 2 in der Probe bestimmt. Die Auswerteeinrichtung 17 kann einen Mikrorechner mit einem Programm zur Auswertung der zeitlichen und/oder örtlichen Konzentrationsverteilung(en) in den Kapillaren 3 aufweisen. Die Auswerteeinrichtung 17 hat eine in der Zeichnung schematisch dargestellte Schnittstelleneinrichtung zum Verbinden mit einer übergeordneten Anzeige- und/oder Auswerteeinheit, beispielsweise einem Mikrocomputer.

Die Vorrichtung 1 zur Bestimmung der Konzentration von in einer flüssigen Probe enthaltenen Liganden 2 weist also eine Kapillare 3 auf, deren Innenhöhlung 4 mit einer Flüssigkeit befüllt ist, welche die Liganden 2 nicht oder in geringerer Konzentration enthält als die Probe. Die Kapillare 3 hat wenigstens eine Öffnung 6 zum Inkontaktbringen der Flüssigkeit mit der Probe. In der Innenhöhlung 4 der Kapillaren 3 sind Rezeptoren 5 immobilisiert, die beim Kontaktieren der Liganden 2 mit diesen eine Bindung eingehen. Die Rezeptoren 5 sind von der Öffnung 6 beabstandet und über eine durch die Flüssigkeit gebildete Diffusionsstrecke mit der Öffnung 6 verbunden. Zur Erfassung mindestens eines die Häufigkeit der Liganden-Rezeptor-Bindungen repräsentierenden Messwerts Ist wenigstens ein Sensor 7 vorgesehen. Die Vorrichtung 1 ermöglicht in einem breiten Konzentrationsbereich eine genaue Messung der Konzentration der Liganden 2 in der Probe.

**Patentansprüche**

1. Vorrichtung (1) zur Bestimmung der Konzentration von in einer flüssigen Probe enthaltenen Liganden, (2), mit einem Träger, der mindestens eine Kapillare (3) mit wenigstens einer Öffnung (6) aufweist, wobei in der Kapillaren (3) an der Oberfläche des Trägers Rezeptoren (5) immobilisiert sind, die beim Kontaktieren der Liganden (2) mit diesen eine Bindung eingehen, und mit wenigstens einem Sensor (7) zur Erfassung mindestens eines die Häufigkeit der Liganden-Rezeptor-Bindungen repräsentierenden Messwerts, **dadurch gekennzeichnet, dass** die Innenhöhlung (4) der Kapillaren (3) mit einer Flüssigkeit befüllt ist, welche die Liganden (2) nicht oder in geringerer Konzentration enthält als die Probe, dass die Flüssigkeit über die Öffnung mit der Probe in Kontakt bringbar ist, dass die Rezeptoren (5) in der Innenhöhlung (4) der Kapillaren (3) mit Abstand zu der Öffnung (6) angeordnet sind und über eine durch die Flüssigkeit gebildete, sich entlang der Kapillaren erstreckende Diffuslonsstrecke mit der Öffnung (6) verbunden sind.

2. Vorrichtung (1) nach Anspruch 1, **dadurch gekennzeichnet, dass** an wenigstens zwei in unterschiedlichen Abständen zu der Öffnung (6) angeordneten Stellen der Kapillaren (3) Rezeptoren (5) angeordnet sind und dass der wenigstens eine Sensor (7) für diese Stellen jeweils zur Erfassung mindestens eines, die Häufigkeit der Liganden-Rezeptor-Bindungen repräsentierenden Messwerts ausgebildet ist.

3. Vorrichtung (1) nach Anspruch 1 oder 2, **dadurch gekennzeichnet, dass** der wenigstens eine Sensor (7) in der Wandung der Kapillaren (3) angeordnet ist, und dass die Rezeptoren (5) vorzugsweise an der Oberfläche des Sensors (7) immobilisiert sind.

4. Vorrichtung (1) nach Anspruch 3, **dadurch gekennzeichnet, dass** mehrere der Messanordnungen, bestehend aus dem Sensor (7) und den an dessen Oberfläche immobilisierten Rezeptoren (5) vorzugsweise in konstanten Abständen zueinander in wenigstens einer sich entlang der Diffusionsstrecke erstreckenden Reihe nebeneinander angeordnet sind.

5. Vorrichtung (1) nach einem der Ansprüche 1 bis 4, **dadurch gekennzeichnet dass** in der Innenhöhlung (4) der Kapillaren (3) wenigstens zwei Arten von Rezeptoren (5) immobilisiert sind, und dass diese Arten von Rezeptoren (5) vorzugsweise In wenigstens zwei sich jeweils entlang der Diffusionsstrecke erstreckenden Reihen nebeneinander angeordnet sind.

6. Vorrichtung (1) nach einem der Ansprüche 1 bis 5, **dadurch gekennzeichnet, dass** die Rezeptoren (5) von wenigstens zwei Rezeptor-Arten eine unterschiedilche Affinität zu dem Liganden (2) aufweisen und dass vorzugsweise mindestens drei Rezeptor-Arten vorgesehen sind, die eine abgestufte Affinität zu dem Liganden (2) aufweisen.

7. Vorrichtung (1) nach einem der Ansprüche 1 bis 6, **dadurch gekennzeichnet, dass** die Kapillare (3) zusätzlich zu der ersten Öffnung (6) eine zweite Öffnung (8) zum Inkontaktbringen der Flüssigkeit mit einem Kompetitoren (9) enthaltenden Fluid aufweist, und dass die Rezeptoren (5) zwischen den Öffnungen (6, 8) angeordnet und von diesen beabstandet sind.

8. Vorrichtung (1) nach Anspruch 7, **dadurch gekennzeichnet dass** die zweite Öffnung (8) zum Zuführten des Fluids mit einer Pumpe oder dergleichen Fördereinrichtung verbunden ist.

9. Vorrichtung (1) nach einem der Ansprüche 1 bis 8, **dadurch gekennzeichnet, dass** die Liganden (2) oder Kompetitoren (9) mit mindestens einem Lumineszenz-Stoff (10) markiert sind, dass die Vorrichtung (1) eine Strahlungsquelle zur Aussendung von Strahlung auf den mindestens einen Lumineszenz-Stoff (10) aufweist die wenigstens eine Anregungswellenlänge hat, bei welcher der Lumineszenz-Stoff (10) zur Abgabe von Lumineszenzstrahlung (12) angeregt wird, und dass der wenigstens eine Sensor (7) als Sirahlungsempfänger zum Detektieren der Lumineszenzstrahlung (12) ausgebildet ist, der hinsichtlich seiner spektralen Empfindlichkeit für die von der Strahlungsquelle ausgesandte Strahlung (11) unempfindlich ist.

10. Vorrichtung (1) nach einem der Ansprüche 1 bis 9, **dadurch gekennzeichnet, dass** die Kapillare (3) für die Lumineszenzstrahlung (12) im Wesentlichen undurchlässig ist und wenigstens einen für die von der Strahlungsquelle ausgesandte Strahlung (11) transparenten Wandungsbereich hat, und dass die Strahlungsquelle außerhalb der Kapillaren (3) angeordnet ist, derart, dass die von der Strahlungsquelle ausgesandte Strahlung (11) durch den Wandungsbereich hindurch in die Innenhöhlung (4) der Kapillaren (3) eingekoppelt wird.

11. Vorrichtung (1) nach einem der Ansprüche 1 bis 10, **dadurch gekennzeichnet, dass** der Lumineszenz-Stoff (10) derart ausgebildet ist, dass die Wellenlänge der lumineszenzstrahlung (12) kleiner ist als die Anregungswellenlänge.

12. Vorrichtung (1) nach einem der Ansprüche 1 bis 11, **dadurch gekennzeichnet, dass** der für die von der Strahlungsquelle ausgesandte Strahlung (11) transparente Wandungsbereich der Kapillaren (3) durch ein Halbleitersubstrat gebildet Ist, und dass der wenigstens eine Sensor (7) als vorzugsweise auf diesem Halbleifiersubstrat angeordnetes Halbleiterbauelement ausgebildet ist.

13. Vorrichtung (1) nach einem der Ansprüche 1 bis 12, **dadurch gekennzeichnet, dass** die Kapillare (3) zur Bildung einer Diffusionsbarriere an wenigstens einer Stelle der Diffusionsstrecke eine Querschnittsveränderung aufweist

14. Vorrichtung (1) nach einem der Ansprüche 1 bis 1 3, **dadurch gekennzeichnet, dass** mehrere der mit der Flüssigkeit befüllten, die Rezeptoren (5) enthaltenden Kapillaren (3) vorgesehen sind, die mit ihren Öffnungen (6) einer gemeinsamen Aufnahmestelle (13) zugewandt sind, und dass die Kapillaren (3) vorzugsweise radial oder sternförmig um die Aufnahmestelle (13) herum angeordnet sind.

15. Vorrichtung (1) nach Anspruch 14, **dadurch gekennzeichnet, dass** die Aufnahmestelle (13) als Verteiler ausgebildet Ist, der zum Zuführen der Probe zu den Öffnungen (6) der Kapillaren (3) mit einer Kanüle (14) verbunden ist.

16. Vorrichtung (1) nach Anspruch 14 oder 15, **dadurch gekennzeichnet, dass** die Kapillaren (3) im wesentlichen in einer Ebene angeordnet sind und dass die Kanüle (14) mit Ihrer Erstreckungsrichtung quer und insbesondere rechtwinklig zu dieser Ebene orientiert ist.

17. Verfahren zur Bestimmung der Konzentration von in einer zu untersuchenden Probe enthaltenen Liganden (2), wobei an der Oberfläche eines Trägers Rezeptoren (5) immobilisiert werden, die beim Kontaktieren der Liganden (2) mit diesen eine Bindung eingehen, wobei mindestens ein die Häufigkeit der Bindungen zwischen den Liganden (2) und den Rezeptoren (3) repräsentierender Messwert erfasst und anhand dieses Messwertes die Konzentration der Liganden (2) in der Probe bestimmt wird, **dadurch gekennzeichnet dass** die Rezeptoren (5) in einer Flüssigkeit angeordnet werden, welche die Liganden (2) nicht oder in geringerer Konzentration enthält als die Probe, dass die Probe mit Abstand von den Rezeptoren (5) mit der Flüssigkeit derart in Kontakt gebracht wird, dass die Liganden (2) entlang einer durch die Flüssigkeit verlaufenden Diffusionsstrecke zu den Rezeptoren (5) diffundieren, und dass die Konzentration der Liganden in der Probe aus

- dem mindestens einen Messwert, der Länge der Diffusionsstrecke sowie der Zeitdauer zwischen dem Inkontaktbringen der Probe mit der Flüssigkeit und der Erfassung des mindestens einen Messwerts und/oder

- dem mindestens einen Messwert, der Länge der Diffusionsstrecke sowie einer Diffusionskonstanten und/oder

- mindestens zwei In unterschiedlichen Entfernungen von der Öffnung zeit gleich erfassten Messwerte sowie der Diffusionskonstanten und/oder

- mindestens zwei in unterschiedlichen Entfernungen von der Öffnung zeitgleich erfassten Messwerte sowie mindestens einen Referenzwert für einen mit der Probe vergleichbaren Analyt mit bekannter Konzentration bestimmt wird.

## Claims

1.  Apparatus (1) for determining the concentration of ligands (2) contained in a liquid sample, with a support which has at least one capillary (3) with at least one opening (6), with receptors (5) being immobilized in the capillaries (3) on the surface of the support, which receptors bind to the ligands (2) when they contact the latter, and with at least one sensor (7) for detecting at least one measured value representing the frequency of the ligand-receptor bindings, **characterized in that** the internal cavity (4) of the capillaries (3) is filled with a liquid which does not contain the ligands (2) or in which the concentration of the ligands is lower than in the sample, **in that** the liquid can be brought into contact with the sample via the opening, **in that** the receptors (5) in the inner cavity (4) of the capillaries (3) are arranged at a distance from the opening (6) and are connected to the opening (6) via a diffusion path which is formed by the liquid and extends along the capillaries.

2.  Apparatus (1) according to Claim 1, **characterized in that** receptors (5) are arranged at at least two locations of the capillaries (3) which are at different distances from the opening (6) and **in that** the at least one sensor (7) for these locations is designed in each case for detecting at least one measured value representing the frequency of the ligand-receptor bindings.

3.  Apparatus (1) according to Claim 1 or 2, **characterized in that** the at least one sensor (7) is arranged in the wall of the capillaries (3) and **in that** the receptors (5) are preferably immobilized on the surface of the sensor (7).

4.  Apparatus (1) according to Claim 3, **characterized in that** a plurality of the measuring arrangements, comprising the sensor (7) and the receptors (5) immobilized on the surface thereof, are arranged next to each other at preferably constant distance from one another in at least one row extending along the diffusion path.

5.  Apparatus (1) according to one of Claims 1 to 4, **characterized in that** at least two types of receptors (5) are immobilized in the inner cavity (4) of the capillaries (3), and **in that** these types of receptors (5) are arranged next to each other in preferably at least two rows respectively extending along the diffusion path.

6.  Apparatus (1) according to one of Claims 1 to 5, **characterized in that** the receptors (5) of at least two receptor types have differing affinity to the ligand (2), and **in that** at least three receptor types are preferably provided which have a stepped affinity to the ligand (2).

7.  Apparatus (1) according to one of Claims 1 to 6, **characterized in that**, in addition to the first opening (6), the capillary (3) has a second opening (8) for bringing the liquid into contact with a fluid comprising a competitor (9), and **in that** the receptors (5) are arranged between the openings (6, 8) and distanced from the latter.

8.  Apparatus (1) according to Claim 7, **characterized in that** the second opening (8) for feeding the fluid is connected to a pump or such a feed device.

9.  Apparatus (1) according to one of Claims 1 to 8, **characterized in that** the ligands (2) or competitors (9) are marked by at least one luminescent substance (10), **in that** the apparatus

    (1) has a radiation source for emitting radiation onto the at least one luminescent substance (10), which radiation has at least one excitation wavelength at which the luminescent substance (10) is excited to emit luminescent radiation (12), and **in that** the at least one sensor (7) is designed as a radiation receiver for detecting the luminescent radiation (12), which sensor with respect to its spectral sensitivity is insensitive to radiation (11) emitted by the radiation source.

10. Apparatus (1) according to one of Claims 1 to 9, **characterized in that** the capillary (3) is substantially opaque to the luminescent radiation (12) and has at least one transparent wall region for the radiation (11) emitted by the radiation source, and **in that** the radiation source is arranged outside of the capillaries (3) such that the radiation (11) emitted by the radiation source is coupled into the internal cavity (4) of the capillaries (3) through the wall region.

**11.** Apparatus (1) according to one of Claims 1 to 10, **characterized in that** the luminescent substance (10) is designed such that the wavelength of the luminescent radiation (12) is shorter than the excitation wavelength.

**12.** Apparatus (1) according to one of Claims 1 to 11, **characterized in that** the wall region of the capillaries (3) which is transparent to the radiation (11) emitted by the radiation source is formed by a semiconductor substrate, and **in that** the at least one sensor (7) is designed as a semiconductor component preferably arranged on this semiconductor substrate.

**13.** Apparatus (1) according to one of Claims 1 to 12, **characterized in that** the capillary (3) has a cross-sectional change at at least one location along the diffusion path for forming a diffusion barrier.

**14.** Apparatus (1) according to one of Claims 1 to 13, **characterized in that** a plurality of capillaries' (3) which are filled with the liquid and contain the receptors (5) are provided, the openings (6) of which capillaries facing a common intake location (13), and **in that** the capillaries (3) are preferably arranged radially or in a star-shaped fashion around the intake location (13).

**15.** Apparatus (1) according to Claim 14, **characterized in that** the intake location (13) is designed as a distributor which is connected to a cannula (14) for supplying the sample to the openings (6) of the capillaries (3).

**16.** Apparatus (1) according to Claim 14 or 15, **characterized in that** the capillaries (3) are substantially arranged in a plane and **in that** the direction of extent of the cannula (14) is oriented across and in particular perpendicular to said plane.

**17.** Method for determining the concentration of ligands (2) contained in a sample to be examined, in which receptors (5) are immobilized at the surface of a support and which receptors bind to the ligands (2) when they contact the latter, in which at least one measured value is detected which represents the frequency of the binding between the ligands (2) and the receptors (3) and in which the concentration of the ligands (2) in the sample is determined on the basis of this measured value, **characterized in that** the receptors (5) are arranged in a liquid which does not contain the ligands (2) or in which the concentration of the ligands is lower than in the sample, **in that** the sample is brought into contact with the liquid at a distance from the receptors (5) such that the ligands (2) diffuse to the receptors (5) along a diffusion path running through the liquid, and **in that** the concentration of the ligands in the sample is determined from

- the at least one measured value, the length of the diffusion path and the time duration between bringing the sample into contact with the liquid and detecting the at least one measured value and/or
- the at least one measured value, the length of the diffusion path and a diffusion constant and/or
- at least two measured values detected simultaneously at different distances from the opening and the diffusion constants and/or
- at least two measured values detected simultaneously at different distances from the opening and at least one reference value for an analyte with a known concentration which is comparable to the sample.

**Revendications**

**1.** Dispositif (1) pour la détermination de la concentration en ligands (2) contenus dans un échantillon liquide, présentant un support qui présente au moins un capillaire (3) avec au moins une ouverture (6), où, dans le capillaire (3), à la surface du support, des récepteurs (5) sont immobilisés, qui se lient aux ligands (2) lors d'un contact avec ceux-ci et présentant au moins un capteur (7) pour détecter au moins une valeur de mesure représentant la fréquence des liaisons ligands-récepteurs, **caractérisé en ce que** le creux intérieur (4) du capillaire (3) est rempli d'un liquide qui ne contient pas les ligands (2) ou qui les contient en une concentration plus faible que l'échantillon, **en ce que** le liquide peut être mis en contact avec l'échantillon via l'ouverture, **en ce que** les récepteurs (5) sont disposés dans le creux intérieur (4) du capillaire (3) à une certaine distance de l'ouverture (6) et sont reliés à l'ouverture (6) par une zone de diffusion formée par le liquide, s'étendant le long du capillaire.

**2.** Dispositif (1) selon la revendication 1, **caractérisé en ce qu'**en au moins deux sites du capillaire (3) disposés à des distances différentes par rapport à l'ouverture (6) sont disposés des récepteurs (5) et **en ce que** ledit au moins un capteur (7) pour ces sites est à chaque fois réalisé pour détecter au moins une valeur de mesure représentant la fréquence des liaisons ligands-récepteurs.

**3.** Dispositif (1) selon la revendication 1 ou 2, **caractérisé en ce que** ledit au moins un capteur (7) est disposé dans la paroi du capillaire (3) et **en ce que** les récepteurs (5) sont de préférence immobilisés à la surface du capteur (7).

**4.** Dispositif (1) selon la revendication 3,

**caractérisé en ce que** plusieurs des dispositions de mesure, constituées par le capteur (7) et les récepteurs (5) immobilisés à sa surface sont de préférence disposées l'une à côté de l'autre à des distances constantes l'une de l'autre en au moins une rangée s'étendant le long de la zone de diffusion.

5. Dispositif (1) selon l'une quelconque des revendications 1 à 4, **caractérisé en ce que** dans le creux interne (4) du capillaire (3) sont immobilisés au moins deux types de récepteurs (5) et **en ce que** ces types de récepteurs (5) sont de préférence disposés l'un à côté de l'autre en au moins deux rangées s'étendant le long de la zone de diffusion.

6. Dispositif (1) selon l'une quelconque des revendications 1 à 5, **caractérisé en ce que** les récepteurs (5) d'au moins deux types de récepteurs présentent une affinité différente pour le ligand (2) et **en ce que** de préférence au moins trois types de récepteur sont prévus, qui présentent une affinité échelonnée pour le ligand (2).

7. Dispositif (1) selon l'une quelconque des revendications 1 à 6, **caractérisé en ce que** le capillaire (3) présente, en plus de la première ouverture (6) une deuxième ouverture (8) pour la mise en contact du liquide avec un fluide contenant des compétiteurs (9) et **en ce que** les récepteurs (5) sont disposés entre les ouvertures (6, 8) et à une certaine distance de celles-ci.

8. Dispositif (1) selon la revendication 7, **caractérisé en ce que** la deuxième ouverture (8) pour l'alimentation du fluide est raccordée à une pompe ou un dispositif de transport analogue.

9. Dispositif (1) selon l'une quelconque des revendications 1 à 8, **caractérisé en ce que** les ligands (2) ou les compétiteurs (9) sont marqués par au moins une substance luminescente (10), **en ce que** le dispositif (1) présente une source de rayonnement pour émettre un rayonnement sur ladite au moins une substance luminescente (10), qui présente au moins une longueur d'onde d'excitation à laquelle la substance luminescente (10) est excitée pour émettre un rayonnement de luminescence (12) et **en ce que** ledit au moins un capteur (7) est réalisé sous forme de récepteur de rayonnement pour la détection du rayonnement de luminescence (12), qui est insensible, en ce qui concerne sa sensibilité spectrale, au rayonnement (11) émis par la source de rayonnement.

10. Dispositif (1) selon l'une quelconque des revendications 1 à 9, **caractérisé en ce que** le capillaire (3) est essentiellement imperméable au rayonnement de luminescence (12) et présente au moins une zone de paroi transparente au rayonnement (11) émis par la source de rayonnement et **en ce que** la source de rayonnement est disposée en dehors du capillaire (3) de manière telle que le rayonnement (11) émis par la source de rayonnement est couplé via la zone de paroi dans le creux interne (4) du capillaire (3).

11. Dispositif (1) selon l'une quelconque des revendications 1 à 10, **caractérisé en ce que** la substance de luminescence (10) est réalisée de manière telle que la longueur d'onde du rayonnement de luminescence (12) est inférieure à la longueur d'onde d'excitation.

12. Dispositif (1) selon l'une quelconque des revendications 1 à 11, **caractérisé en ce que** la zone de paroi du capillaire (3) transparente au rayonnement (11) émis par la source de rayonnement est formée par un substrat semi-conducteur et **en ce que** ledit au moins un capteur (7) est de préférence réalisé comme un élément semi-conducteur disposé sur ce substrat semi-conducteur.

13. Dispositif (1) selon l'une quelconque des revendications 1 à 12, **caractérisé en ce que** le capillaire (3) présente une modification de section en au moins un site de la zone de diffusion pour la formation d'une barrière de diffusion.

14. Dispositif (1) selon l'une quelconque des revendications 1 à 13, **caractérisé en ce qu'**on a prévu plusieurs capillaires (3) remplis de liquide, contenant les récepteurs (5), qui sont orientés avec leurs ouvertures (6) vers un site de réception commun (13) et **en ce que** les capillaires (3) sont de préférence disposés radialement ou en forme d'étoile autour du site de réception (13).

15. Dispositif (1) selon la revendication 14, **caractérisé en ce que** le site de réception (13) est réalisé sous forme de répartiteur, qui est raccordé à une canule (14) pour le transport de l'échantillon vers les ouvertures (6) du capillaire (3).

16. Dispositif (1) selon la revendication 14 ou 15, **caractérisé en ce que** les capillaires (3) sont disposés essentiellement dans un plan et **en ce que** la canule (14) est orientée avec sa direction étendue transversalement et en particulier perpendiculairement à ce plan.

17. Procédé pour la détermination de la concentration en ligands (2) contenus dans un échantillon à analyser, où des récepteurs (5) sont immobilisés à la surface d'un support, qui forment une liaison avec les ligands (2) lors du contact avec ceux-ci, au moins une valeur de mesure représentant la fréquence des liaisons entre les ligands (2) et les récepteurs (3) étant détectée et la concentration en ligands (2) dans l'échantillon étant déterminée à l'aide de cette valeur de mesure, **caractérisé en ce que** les récepteurs (5) sont disposés dans un liquide, qui ne contient pas les ligands (2) ou qui les contient en une concentration plus faible que l'échantillon, **en ce que** l'échantillon est mis en contact avec le liquide à une certaine distance des récepteurs (5) de manière telle que les ligands (2) diffusent le long d'une zone de diffusion s'étendant dans le liquide vers les récepteurs (5) et **en ce que** la concentration en ligands dans l'échantillon est déterminée à partir de

- ladite au moins une valeur de mesure, la longueur de la zone de diffusion ainsi que la durée entre la mise en contact de l'échantillon avec le liquide et la détection de ladite au moins une valeur de mesure et/ou
- ladite au moins une valeur de mesure, la longueur de la zone de diffusion ainsi qu'une constante de diffusion et/ou
- au moins deux valeurs de mesure détectées simultanément à des écarts différents de l'ouverture ainsi que les constantes de diffusion et/ou
- au moins deux valeurs de mesure détectées simultanément à des écarts différents de l'ouverture ainsi qu'au moins une valeur de référence pour un analyte comparable avec l'échantillon de concentration connue.

Fig. 1

Fig. 2

Fig. 3

Fig. 4

Fig. 5

Fig. 6

Fig. 7

Fig. 8

Fig. 9

**EP 1 517 753 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9511755 A1
- EP 0723146 A1